# EUROPÄISCHE PATENTSCHRIFT

(11) **EP 2 440 802 B1**
(45) Veröffentlichungstag und Bekanntmachung des Hinweises auf die Patenterteilung: **06.03.2013**
(21) Anmeldenummer: 10713979.2
(22) Anmeldetag: 19.04.2010
(51) Int. Cl.: F16C 25/04, B60S 1/34, B60S 1/16, F16C 17/10

(54) **LAGEREINRICHTUNG ZUR LAGERUNG EINER WELLE**
BEARING DEVICE FOR MOUNTING A SHAFT
SYSTÈME PALIER POUR SOUTENIR UN ARBRE

(30) Priorität: 10.06.2009 DE 102009026875
(43) Veröffentlichungstag der Anmeldung: 18.04.2012
(73) Patentinhaber: Robert Bosch GmbH, 70442 Stuttgart (DE)
(72) Erfinder: KASTINGER, Guenter, 76571 Gaggenau-Sulzbach (DE); HUESGES, Mario, 77830 Buehlertal (DE); OBERT, Mike, 76593 Gernsbach (DE); LAUK, Detlef, 77871 Renchen (DE); RIEDINGER, Klaus, 76571 Gaggenau (DE)
(86) Internationale Anmeldenummer: PCT/EP2010/055085
(87) Internationale Veröffentlichungsnummer: WO 2010/142483

(56) Entgegenhaltungen:
- DE-A1- 19 652 929
- DE-A1- 19 738 396

## Beschreibung

Die Erfindung bezieht sich auf eine Lagereinrichtung zur Lagerung einer Welle nach dem Oberbegriff des Anspruches 1.

### Stand der Technik

Aus der DE 196 52 929 A1 ist es bekannt, die Ankerwelle eines Elektromotors in einem Getriebegehäuse, welches an das Motorgehäuse angeflanscht ist, in Wälzlagern drehbar zu lagern. Die Wälzlager bestehen in an sich bekannter Weise aus einem Außenring, welches in einem Lagersitz im Getriebegehäuse kraftschlüssig aufgenommen ist, und einem drehbaren Innenring, der drehfest mit der Ankerwelle verbunden ist. Im Getriebegehäuse sind insgesamt zwei axial zueinander beabstandete Wälzlager zur Lagerung der Ankerwelle vorgesehen.

### Offenbarung der Erfindung

Der Erfindung liegt die Aufgabe zugrunde, eine Lagereinrichtung zur Lagerung einer Welle konstruktiv zu vereinfachen.

Diese Aufgabe wird erfindungsgemäß mit den Merkmalen des Anspruches 1 gelöst. Die Unteransprüche geben zweckmäßige Weiterbildungen an.

Die Lagereinrichtung zur Lagerung einer Welle weist in einem Gehäuse eine Lagerstelle auf, wobei die Welle mit einem koaxialen Getriebebauteil gekoppelt ist. Erfindungsgemäß ist vorgesehen, dass ein Radkörper bzw. eine Nabe des Getriebebauteils ein Lagerbauteil bildet, welches in der Lagerstelle im Gehäuse drehbar aufgenommen ist.

Diese Ausführung hat den Vorteil, dass auf ein als zusätzliches, separates Bauteil ausgeführtes Lagerbauteil verzichtet werden kann. Die Lagerung erfolgt über die Nabe des Getriebebauteils, dem somit eine doppelte Funktion zukommt. Zum einen dient das Getriebebauteil zur Übertragung der Drehbewegung der Welle, beispielsweise auf ein Werkzeug, zum andern wird die Nabe des Getriebebauteils als Lagerbauteil genutzt. Zur Reduzierung von Reibung ist es hierbei zweckmäßig, zumindest die Nabe, zweckmäßigerweise aber das gesamte Getriebebauteil aus einem reibungsarmen Material zu fertigen, beispielsweise aus einem thermoplastischen Kunststoff wie POM.

Als Getriebebauteil kommt ein Zahnrad in Betracht, das stirnseitig auf der Welle aufsitzt und fest mit dieser verbunden ist. Der Radkörper des Zahnrades bildet die Nabe, welche als Lagerbauteil zur Lagerung der Welle im Gehäuse eingesetzt wird.

Die Nabe ist vorzugsweise einteilig mit dem Getriebebauteil ausgebildet. Grundsätzlich kommt aber auch eine separate Ausführung der Nabe von weiteren Getriebebauteilabschnitten wie einer Verzahnung in Betracht, wobei auch in diesem Fall die Nabe mit den weiteren Getriebebauteilabschnitten fest verbunden ist. So kann die Nabe als separate Hülse ausgeführt sein, die mit dem Getriebebauteil verbunden ist. Im Falle einer Ausführung der Hülse aus Metall und des Getriebebauteils als Kunststoffkörper kann die Hülse in den Kunststoffkörper eingespritzt sein.

Die Nabe ist zweckmäßigerweise topfförmig ausgebildet und umgreift eine Stirnseite der Welle, mit der das Getriebebauteil fest gekoppelt ist.

Insgesamt wird über die Nutzung der Nabe des Getriebebauteils als Lagerbauteil eine Vereinfachung erreicht, da zum einen ein Lagerbauteil zur Lagerung der Welle entfallen kann und zum andern auch die Montage vereinfacht ist. Des Weiteren werden Toleranzprobleme verringert, welche im Stand der Technik dadurch entstehen, dass ein separat ausgebildetes Lagerbauteil die Toleranzkettenlänge verlängert. Dementsprechend ist bei der erfindungsgemäßen Ausführung aufgrund des Wegfalls eines separaten Lagers die Toleranzkettenlänge verkürzt, wobei die gewonnene Toleranz für sonstige beteiligte Bauteile genutzt werden kann, beispielsweise für ein in das Gehäuse eingesetztes Stützblech, in welchem eine Lagerstelle für die Nabe gebildet ist.

Ein derartiges Stützblech ist zweckmäßigerweise für die Bildung einer zweiten Lagerstelle in das Gehäuse eingesetzt, welche zusätzlich zu einer unmittelbar in einem Gehäusesitz des Gehäuses angeordneten, ersten Lagerstelle vorgesehen ist. Das Stützblech, welches insbesondere aus Blech besteht und im Tiefziehverfahren hergestellt wird, ermöglicht es, Abstützkräfte und -momente, die von der Lagerung der Welle ausgehen, über eine größere Fläche bzw. einen größeren Abstand zur Drehachse im Gehäuse zu verteilen, so dass die punktuelle Belastung reduziert ist. Dies ermöglicht es, ein Gehäuse beispielsweise aus Blech einzusetzen, welches im Tiefziehverfahren hergestellt wird, ohne Festigkeitsgrenzen des Gehäuses zu überschreiten. Unterstützt wird dies auch durch einen verhältnismäßig großen axialen Abstand zwischen den beiden Lagerstellen, gebildet im Gehäusesitz des Gehäuses und in dem als zusätzliches Bauteil ausgeführten Stützblech. Zudem ist über die Wahl des Stützblechs in einfacher Weise eine konstruktive Anpassung an die jeweilige Einbausituation im Gehäuse möglich.

Das Stützblech besteht vorzugsweise aus einem Hülsenabschnitt, der koaxial zur Welle verläuft, und einem radialen Scheibenwandabschnitt, der sich am Gehäuse abstützt. Der Hülsenabschnitt bildet die Lagerstelle zur Aufnahme der Nabe. Die radiale Scheibenwandung kann zusätzlich als Stützfläche zur Abstützung eines Getriebebauteilabschnittes genutzt werden.

Die Lagereinrichtung dient insbesondere zur Lagerung einer Abtriebs- bzw. Getriebewelle, über die die Ankerwellenbewegung eines Elektromotors weitergeleitet wird, oder auch einer Ankerwelle eines Elektromotors, bei dem es sich beispielsweise um einen Frontwischermotor in einem Kraftfahrzeug handelt. Das Gehäuse beherbergt vorteilhafterweise den Elektromotor und ein Getriebe zur Übertragung der Drehbewegung der Ankerwelle.

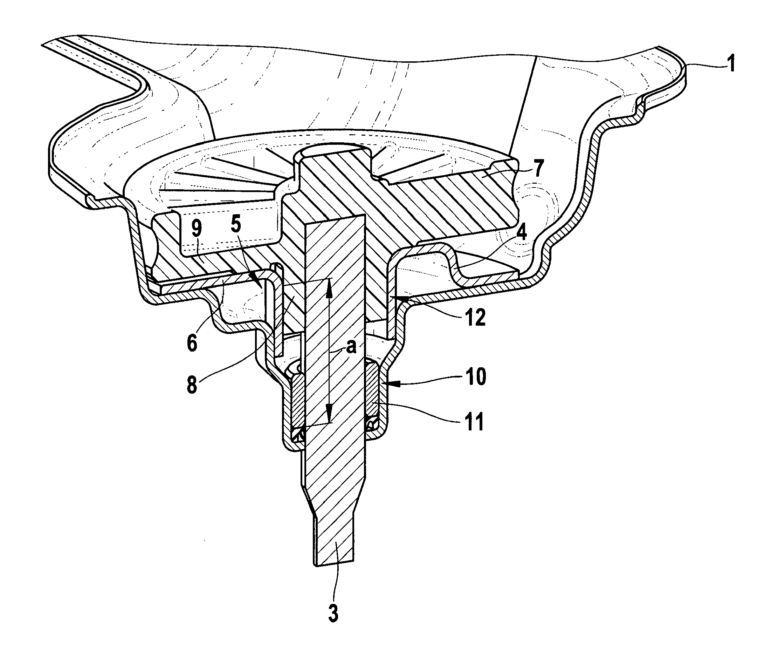

Weitere Vorteile und zweckmäßige Ausführungen sind den weiteren Ansprüchen, der Figurenbeschreibung und der Zeichnung zu entnehmen, in der die Lagerung einer Welle über zwei Lagerstellen in einem Gehäuse im Schnitt dargestellt ist.

Die in der Figur gezeigte Lagereinrichtung zur Lagerung einer Welle 3 umfasst ein Gehäuse 1 einer Motor-Getriebe-Einheit mit einem elektrischen Antriebsmotor und einem Getriebe, beispielsweise für ein Aggregat in einem Kraftfahrzeug wie ein Frontwischermotor. Bei der Welle 3 handelt es sich um eine Getriebe- bzw. Abtriebswelle, die von der Ankerwelle des Elektromotors angetrieben wird. Zur Umsetzung der Drehbewegung der Ankerwelle auf die Abtriebswelle 3 ist diese im Bereich einer Stirnseite drehfest mit einem Getriebebauteil 7 gekoppelt, welches im Ausführungsbeispiel als Zahnrad ausgebildet ist, das koaxial zur Welle 3 angeordnet ist.

Im Gehäuse 1 ist ein Stützblech 4 aufgenommen, welches als separat vom Gehäuse ausgeführtes Bauteil ausgebildet ist und insbesondere aus Blech besteht. Auch das Gehäuse kann aus Blech gefertigt sein. Beide Bauteile, also das Gehäuse und das Stützblech, werden vorzugsweise im Tiefziehverfahren hergestellt.

Im Gehäuse 1 ist eine erste Lagerstelle 10 gebildet, in der eine die Welle 3 lagernde Lagerbuchse 11 aufgenommen ist. Die erste Lagerstelle 10 befindet sich auf der dem Zahnrad 7 abgewandten Seite.

Mit axialem Abstand a befindet sich im Gehäuse 1 auf der dem Zahnrad 7 zugewandten Seite eine zweite Lagerstelle 12, die von einem koaxial zur Welle angeordneten Hülsenabschnitt 5 des Stützblechs 4 gebildet ist. Der Hülsenabschnitt 5 erstreckt sich in Achsrichtung und nimmt als Lager-Bauteil eine Nabe 8 des Zahnrades 7 auf. Der Hülsenabschnitt 5 ist im Bereich seiner freien axialen Stirnseite radial an einer Gehäuseinnenwand des Gehäuses 1 abgestützt.

Einteilig mit dem Hülsenabschnitt 5 ist eine sich in Radialrichtung erstreckende Scheibenwandung 6 des Stützblechs 4 ausgebildet, deren radiale Erstreckung die Achserstreckung des Hülsenabschnittes 5 übersteigt. Die radiale Scheibenwandung 6 ist axial am Gehäuse 1 abgestützt.

Die Wandseite der Scheibenwandung 6, die dem Zahnrad 7 zugewandt ist, bildet eine Stützfläche zur Abstützung eines sich in Radialrichtung erstreckenden Abschnittes 9 des Zahnrades 7, wobei der Abschnitt 9 einteilig mit der Nabe 8 ausgebildet ist. Auf diese Weise werden Stützkräfte, die von dem Zahnrad ausgehen, über eine größere radiale und axiale Fläche auf das Stützblech 4 und von dort weiter auf das Gehäuse 1 übertragen.

Die Nabe 8 ist in der zweiten Lagerstelle 12 im Hülsenabschnitt 5 des Stützblechs 4 aufgenommen und bildet ein Lager-Bauteil, so dass auf ein zusätzliches, separat ausgebildetes Lager-Bauteil verzichtet werden kann. Die Nabe 8, zweckmäßigerweise aber das gesamte Zahnrad 7 besteht aus einem reibungsarmen Material, insbesondere aus einem thermoplastischen Kunststoff wie beispielsweise POM.

Die beiden Lagerstellen 10 und 12, die im Gehäusesitz im Gehäuse 1 bzw. im Stützblech 4 gebildet sind, besitzen einen zumindest annähernd gleichen Durchmesser. Auch die axiale Erstreckung der Lagerstellen 10 und 12 ist zumindest annähernd gleich. Über die Wahl des Stützbleches 4 kann der axiale Abstand a zwischen erster und zweiter Lagerstelle auf das erforderliche Maß eingestellt werden.

## Patentansprüche

1. Lagereinrichtung zur Lagerung einer Welle, mit einer in einem Gehäuse (1) angeordneten Lagerstelle (12) für die Welle (3), wobei die Welle (3) mit einem koaxialen Getriebebauteil (7) gekoppelt ist, **dadurch gekennzeichnet, dass** eine Nabe (8) des Getriebebauteils (7) ein Lagerbauteil bildet, das in der Lagerstelle (12) drehbar aufgenommen ist.

2. Lagereinrichtung nach Anspruch 1, **dadurch gekennzeichnet, dass** die Nabe (8) aus Kunststoff besteht, insbesondere aus POM (Polyoximethylen).

3. Lagereinrichtung nach Anspruch 1 oder 2, **dadurch gekennzeichnet, dass** die Nabe (8) drehfest auf eine Stirnseite der Welle (3) aufgesetzt ist und insbesondere eine Stirnseite der Welle (3) topfförmig übergreift.

4. Lagereinrichtung nach einem der Ansprüche 1 bis 3, **dadurch gekennzeichnet, dass** im Gehäuse (1) ein separat ausgebildetes Stützblech (4) aufgenommen ist, in dem die Lagerstelle (12) für die Nabe (8) gebildet ist.

5. Lagereinrichtung nach Anspruch 4, **dadurch gekennzeichnet, dass** in einem Gehäusesitz im Gehäuse (1) eine weitere Lagestelle (10) angeordnet ist, wobei die Lagerstelle (12) im Stützblech (4) und die Lagerstelle (10) im Gehäusesitz mit axialem Abstand zueinander angeordnet sind.

6. Lagereinrichtung nach Anspruch 5, **dadurch gekennzeichnet, dass** die Lagerstelle (12) im Stützblech (4) einen zumindest annähernd gleichen Durchmesser aufweist wie die unmittelbar in den Gehäusesitz eingebrachte Lagerstelle (10).

7. Lagereinrichtung nach einem der Ansprüche 4 bis 6, **dadurch gekennzeichnet, dass** das Stützblech (4) scheibenförmig ausgebildet ist, wobei in einer zentralen Ausnehmung des Stützblechs (4) die Lagerstelle (12) gebildet ist.

8. Lagereinrichtung nach Anspruch 7, **dadurch gekennzeichnet, dass** die sich in Radialrichtung erstreckende Scheibenwandung (6) des Stützblechs (4) sich axial am Gehäuse (1) abstützt.

9. Lagereinrichtung nach Anspruch 7 oder 8, **dadurch gekennzeichnet, dass** die Ausnehmung im Stützblech (4) von einem einteilig mit der radialen Scheibenwandung (6) ausgeführten Hülsenabschnitt (5) begrenzt ist, der die Nabe (8) aufnimmt.

10. Lagereinrichtung nach Anspruch 9, **dadurch gekennzeichnet, dass** der Hülsenabschnitt (5) radial am Gehäuse (1) abgestützt ist.

11. Lagereinrichtung nach einem der Ansprüche 7 bis 10, **dadurch gekennzeichnet, dass** die radiale Scheibenwandung (6) des Stützblechs (4) eine Stützfläche für das Getriebebauteil (7) bildet.

12. Lagereinrichtung nach einem der Ansprüche 7 bis 11, **dadurch gekennzeichnet, dass** die radiale Erstreckung des Stützblechs (4) mindestens gleich groß ist wie seine axiale Erstreckung.

13. Lagereinrichtung nach einem der Ansprüche 1 bis 12 zur Lagerung einer Ankerwelle (3) eines Elektromotors.

14. Lagereinrichtung nach einem der Ansprüche 1 bis 12 zur Lagerung einer Getriebe- oder Abtriebswelle.

15. Gehäuse mit einer Lagereinrichtung nach einem der Ansprüche 1 bis 14.

16. Gehäuse nach Anspruch 15, **dadurch gekennzeichnet, dass** das Gehäuse (1) aus Blech gefertigt ist.

## Claims

1. Bearing device for mounting a shaft, having a bearing point (12), which is arranged in a housing (1), for the shaft (3), wherein the shaft (3) is coupled to a coaxial transmission component (7), **characterized in that** a hub (8) of the transmission component (7) forms a bearing component which is rotatably held in the bearing point (12).

2. Bearing device according to Claim 1, **characterized in that** the hub (8) is composed of plastic, in particular of POM (polyoxymethylene).

3. Bearing device according to Claim 1 or 2, **characterized in that** the hub (8) is mounted rotationally conjointly on an end side of the shaft (3) and in particular engages in the manner of a pot over an end side of the shaft (3).

4. Bearing device according to one of Claims 1 to 3, **characterized in that** a separately formed support plate (4) is held in the housing (1), in which support plate the bearing point (12) for the hub (8) is formed.

5. Bearing device according to Claim 4, **characterized in that** a further bearing point (10) is arranged in a housing seat in the housing (1), wherein the bearing point (12) in the support plate (4) and the bearing point (10) in the housing seat are arranged with an axial spacing to one another.

6. Bearing device according to Claim 5, **characterized in that** the bearing point (12) in the support plate (4) has at least approximately the same diameter as the bearing point (10) formed directly into the housing seat.

7. Bearing device according to one of Claims 4 to 6, **characterized in that** the support plate (4) is of disc-shaped form, wherein the bearing point (12) is formed in a central recess of the support plate (4).

8. Bearing device according to Claim 7, **characterized in that** that disc wall (6) of the support plate (4) which extends in the radial direction is supported axially on the housing (1).

9. Bearing device according to Claim 7 or 8, **characterized in that** the recess in the support plate (4) is delimited by a sleeve portion (5) which is formed in one piece with the radial disc wall (6) and which holds the hub (8).

10. Bearing device according to Claim 9, **characterized in that** the sleeve portion (5) is supported radially on the housing (1).

11. Bearing device according to one of Claims 7 to 10, **characterized in that** the radial disc wall (6) of the support plate (4) forms a support surface for the transmission component (7).

12. Bearing device according to one of Claims 7 to 11, **characterized in that** the radial extent of the support plate (4) is at least as large as its axial extent.

13. Bearing device according to one of Claims 1 to 12 for mounting an armature shaft (3) of an electric motor.

14. Bearing device according to one of Claims 1 to 12 for mounting a transmission or drive output shaft.

15. Housing having a bearing device according to one of Claims 1 to 14.

16. Housing according to Claim 15, **characterized in that** the housing (1) is produced from sheet metal.

## Revendications

1. Système de palier pour supporter un arbre, comprenant une zone de palier (12) pour l'arbre (3) disposée dans un boîtier (1), l'arbre (3) étant accouplé à un composant de transmission coaxial (7), **caractérisé en ce qu'**un moyeu (8) du composant de transmission (7) forme un composant de palier qui est reçu de manière rotative dans la zone de palier (12).

2. Système de palier selon la revendication 1, **caractérisé en ce que** le moyeu (8) se compose de plastique, notamment de POM (polyoxyméthylène).

3. Système de palier selon la revendication 1 ou 2, **caractérisé en ce que** le moyeu (8) est placé de manière solidaire en rotation sur un côté frontal de l'arbre (3) et vient notamment en prise par le dessus en forme de pot avec un côté frontal de l'arbre (3).

4. Système de palier selon l'une quelconque des revendications 1 à 3, **caractérisé en ce qu'**une tôle de support (4) réalisée séparément est reçue dans le boîtier (1), la zone de palier (12) pour le moyeu (8) étant formée dans ladite tôle de support.

5. Système de palier selon la revendication 4, **caractérisé en ce qu'**une autre zone de palier (10) est disposée dans un siège de boîtier dans le boîtier (1), la zone de palier (12) étant disposée dans la tôle de support (4) et la zone de palier (10) étant disposée dans le siège de boîtier, à distance axiale l'une de l'autre.

6. Système de palier selon la revendication 5, **caractérisé en ce que** la zone de palier (12) présente dans la tôle de support (4) un diamètre au moins approximativement identique à celui de la zone de palier (10) directement introduite dans le siège de boîtier.

7. Système de palier selon l'une quelconque des revendications 4 à 6, **caractérisé en ce que** la tôle de support (4) est réalisée en forme de disque, la zone de palier (12) étant formée dans un évidement central de la tôle de support (4).

8. Système de palier selon la revendication 7, **caractérisé en ce que** la paroi de disque (6) de la tôle de support (4) s'étendant dans la direction radiale s'appuie axialement sur le boîtier (1).

9. Système de palier selon la revendication 7 ou 8, **caractérisé en ce que** l'évidement dans la tôle de support (4) est limité par une portion de douille (5) réalisée d'une seule pièce avec la paroi de disque radiale (6), laquelle portion de douille reçoit le moyeu (8).

10. Système de palier selon la revendication 9, **caractérisé en ce que** la portion de douille (5) s'appuie radialement sur le boîtier (1).

11. Système de palier selon l'une quelconque des revendications 7 à 10, **caractérisé en ce que** la paroi de disque radiale (6) de la tôle de support (4) forme une surface de support pour le composant de transmission (7).

12. Système de palier selon l'une quelconque des revendications 7 à 11, **caractérisé en ce que** l'étendue radiale de la tôle de support (4) est au moins aussi grande que son étendue axiale.

13. Système de palier selon l'une quelconque des revendications 1 à 12, pour le support d'un arbre d'induit (3) d'un moteur électrique.

14. Système de palier selon l'une quelconque des revendications 1 à 12, pour le support d'un arbre de transmission ou de prise de force.

15. Boîtier comprenant un système de palier selon l'une quelconque des revendications 1 à 14.

16. Boîtier selon la revendication 15, **caractérisé en ce que** le boîtier (1) est fabriqué en tôle.
